# EUROPÄISCHE PATENTANMELDUNG

(11) **EP 2 348 198 A2**
(43) Veröffentlichungstag der Anmeldung: **27.07.2011**
(21) Anmeldenummer: 10007605.8
(22) Anmeldetag: 22.07.2010
(51) Int. Cl.: F01K 21/04

(54) **Vorrichtung zur Kraft-Wärmeerzeugung**

(30) Priorität: 18.08.2009 DE 102009037805
(71) Anmelder: Gammel Engineering Gmbh, 93326 Abensberg (DE)
(72) Erfinder: Röhrmöser, Klaus, 93326 Abensberg (DE)
(74) Vertreter: Kiessling, Christian

(57) **Zusammenfassung**

Bei einer Vorrichtung (100) zur Kraft-Wärmeerzeugung mit einer Heißgase erzeugenden Feuerungseinheit (110), wobei die in der Feuerungseinheit (110) erzeugten Heißgase dem Eingang einer Primärseite eines Wärmetauschers (120) zuführbar sind, wobei der Eingang der Sekundärseite des Wärmetauschers (120) mindestens indirekt mit dem Ausgang eines Kompressors (130) gekoppelt ist und der Ausgang der Sekundärseite mindestens indirekt mit dem Eingang einer Turbine gekoppelt ist, um mittels des Kompressors (130) komprimierte Luft für den Betrieb der mit einem elektrischen Generator (141) gekoppelten Turbine (140) zu erhitzen, und wobei die am Ausgang der Turbine (140) vorliegenden Heißgase zumindest indirekt in die Feuerungseinheit zurückleitbar sind, wird eine erhebliche Verbesserung des Wirkungsgrades dadurch erreicht, dass zwischen dem Ausgang des Wärmetauschers (120) und dem Eingang der Turbine (140) eine als Nachbrennkammer wirkende Zufeuerungseinheit (142) vorgesehen ist, um die Temperatur der Heißgase vor Eintritt in die Turbine (140) weiter zu erhöhen.

## Beschreibung

Die Erfindung betrifft eine Vorrichtung zur Kraft-Wärmeerzeugung mit einer Heißgase erzeugenden Feuerungseinheit, wobei die in der Feuerungseinheit erzeugten Heißgase dem Eingang einer Primärseite eines Wärmetauschers zuführbar sind, wobei der Eingang der Sekundärseite des Wärmetauschers mindestens indirekt mit dem Ausgang eines Kompressors gekoppelt ist und der Ausgang der Sekundärseite mindestens indirekt mit dem Eingang einer Turbine gekoppelt ist, um mittels des Kompressors komprimierte Luft für den Betrieb der mit einem elektrischen Generator gekoppelten Turbine zu erhitzen, und wobei die am Ausgang der Turbine vorliegenden Heißgase zumindest indirekt in die Feuerungseinheit zurückleitbar sind.

Vorrichtungen zur Kraft-Wärmeerzeugung der eingangs genannten Art werden in unterschiedlichen Einsatzbereichen, oft auch in Verbindung mit einem nachgeschalteten ORC-Kreislauf verwendet. Die bekannten Vorrichtungen sind indes bezüglich des Wirkungsgrades weiter optimierbar.

Aus DE 100 57 276 A1 ist eine Gasturbinenanlage für Biomasse mit externem Gasentwickler bekannt, bei der eine Gasturbine mit Schwelgasen aus Biomasse (Holz, Stroh und andere brennbare, nachwachsende Stoffe) betrieben wird und die mechanische Energie der Turbine für Antriebszwecke, z. B. einen Generator, genutzt wird. Der die Schwelgase erzeugende Gasentwickler kann dabei drucklos, unter Vakuum oder unter Druck stehend, zum Beispiel aus dem Ladekreis, betrieben sein. In der Folge werden die heißen Abgase der Turbine zur Beheizung eines Dampferzeugers genutzt, um eine Dampfturbine zu betreiben, die wiederum mechanische Energie abgibt, um beispielsweise einen Generator anzutreiben.

Aus DE 299 15 154 U1 ist eine Anlage zur energetischen Nutzung von Biomasse in Energiewandlungsanlagen mit Kraft-Wärme-Kopplung bekannt, bei der eine Energiewandlung chemischer gebundener Energie von Biomassen-Brennstoff in die Nutzenergien Wärme und Elektroenergie stattfindet. Einem Biomassevergaser ist dabei in Folge ein Reinigungszyklon, ein Brenngaskühler und Filtersystem nachgeschaltet, denen wiederum eine externe Brennkammer zur Verbrennung des Biogases und ein Oberflächenwärmeüberträger nachgeordnet sind, wobei sekundärseitig eine Verbindung zu einer Heißluftturbine gegeben ist, die wiederum abluftseitig mit einem Abhitzedampferzeuger und einer Dampfturbine gekoppelt ist.

US 2008/0245052 A1 offenbart ein indirekt befeuertes, von Biomasse befeuertes Gasturbinen-System mit einer Brennkammer zur Verbrennung von Biomassepartiken zum Erzeugen eines Brenngases, einem Wärmetauscher zum Herbeiführen eines Wärmeaustausches zwischen dem Brenngas aus der Brennkammer und komprimierter Luft, und mit einer Gasturbine.

Aus EP 0 654 591 B1 ist eine Anlage zur Gewinnung elektrischer- Energie aus Brennstoffen bekannt, mit einer Brennkammer (3), Einrichtungen zum Ansaugen und Verdichten von Luft aus der Umgebung und einer Nutzturbine mit angeschlossenem Generator, wobei die Einrichtungen zum Ansaugen und Verdichten von Luft zumindest zwei in Serie geschaltete Verdichter aufweisen, zwischen denen ein Wasserzerstäuber und/ oder ein Wärmetauscher vorgesehen sind und wobei die Verdichter jeweils Teil eines Turboladers sind. Die Anlage weist einen ersten und einen zweiten, von der Brennkammer jeweils räumlich getrennten Rauchgas-Luft-Wärmetauscher auf, wobei in beiden Rauchgas-Luft-Wärmetauschern die von den Verdichtern angesaugte Luft durch das in der Brennkammer erzeugte Rauchgas erhitzt wird, wobei die Nutzturbine und die Turbinen der Turbolader von der erhitzten Luft antreibbar sind. Beim ersten Rauchgas-Luft-Wärmetauscher ist die Strömungsrichtung der Luft entgegengesetzt zur Strömungsrichtung des Rauchgases gerichtet, wogegen beim zweiten Rauchgas-Luft-Wärmetauscher die Strömungsrichtung der Luft und die Strömungsrichtung des Rauchgases gleich gerichtet sind. Dabei liegt der erste Rauchgas-Luft-Wärmetauscher in Strömungsrichtung der Luft gesehen vor dem zweiten Rauchgas-Luft-Wärmetauscher und in Strömungsrichtung des Rauchgases gesehen hinter dem zweiten Rauchgas-Luft-Wärmetauscher, wobei der zweite Rauchgas Luft-Wärmetauscher zwischen der Turbine eines Turboladers und der Nutzturbine oder zwischen den Turbinen zweier Turbolader geschaltet ist.

Aufgabe der Erfindung ist es, eine Vorrichtung zur Kraft-Wärmeerzeugung zu schaffen, deren Wirkungsgrad gegenüber den bekannten Vorrichtungen verbessert ist.

Für eine Vorrichtung der eingangs genannten Art wird diese Aufgabe erfindungsgemäß dadurch gelöst, dass dem Ausgang des Wärmetauschers und dem Eingang der Turbine eine als Nachbrennkammer wirkende Zufeuerungseinheit vorgesehen ist, um die Temperatur der Heißgase vor Eintritt in die Turbine weiter zu erhöhen.

Bevorzugte Ausführungsformen der Erfindung sind Gegenstand der Unteransprüche.

Bei der erfindungsgemäßen Vorrichtung wird durch die Merkmalskombination, dass dem Ausgang des Wärmetauschers und dem Eingang der Turbine eine als Nachbrennkammer wirkende Zufeuerungseinheit vorgesehen ist, um die Temperatur der Heißgase vor Eintritt in die Turbine weiter zu erhöhen, erreicht, dass mit der Temperatur die Leistung der Turbine gesteigert wird.

Die Zufeuerungseinheit ist in der Regel ausgelegt, um die am Ausgang der Sekundärseite des betreffenden Wärmetauschers vorliegenden Gase vor dem Eintritt in die Turbine um zusätzliche 15% der in Grad Celsius gemessenen Eigentemperatur aufzuheizen.

Gemäß einer ersten bevorzugten Ausführungsform der erfindungsgemäßen Vorrichtung ist vorgesehen, dass der Wärmetauscher als Gas/Gas-Wärmetauscher ausgelegt ist.

Gemäß einer anderen bevorzugten Ausführungsform der erfindungsgemäßen Vorrichtung ist vorgesehen, dass die Zufeuerungseinheit ausgelegt ist, um Pyrolyseöle und andere Öle zu verbrennen.

Pyrolyseöle enthalten in der Regel als brennbare Bestandteile mindestens höhere Kohlenwasserstoffe, Methanol und organische Säuren.

Pyrolyseöle können generell durch Erhitzen von Biomasse oder alternativ durch Vergasen von Biomasse mit Luft oder auch mit Wasserdampf erstellt werden, sowohl als Hauptprodukt als auch als Nebenprodukt der Erzeugung von Pyrolysegasen.

Die Biomasse enthält vorzugsweise einen hohen Zellulose-Anteil wie z.B. Holz mit Rinden- und Grünanteilen oder landwirtschaftlicher Reststoffe wie zum Beispiel Nussschalen oder Stroh erstellbar. Auch getrockneter Klärschlamm ist als Biomasse geeignet.

Gemäß einer wichtigen bevorzugten Ausführungsform der erfindungsgemäßen Vorrichtung ist vorgesehen, dass zwischen dem Ausgang des Kompressors und dem Eingang der Sekundärseite des Wärmetauschers eine als Einspritzkühler wirkende Wassereindüseinrichtung vorgesehen ist.

Die Wassereindüseinrichtung ist dabei vorzugsweise ausgelegt, um die Effektivität einer Kühlung der Heißgase auf der Primärseite des Wärmetauschers zu erhöhen und um das Ausmaß eines Volumenstroms von Gasen durch die Sekundärseite des Wärmetauschers zu erhöhen, und in Folge die Ausgangsleistung der Turbine zu erhöhen.

Die Wassereindüseinrichtung ist vorzugsweise ausgelegt, um eine Temperatur der Austrittsgase der Primärseite des Wärmetauschers um etwa 10% bis 60%, insbesondere 40% der in Grad Celsius gemessenen Eigentemperatur zu senken.

Die Zufeuerungseinheit ist vorzugsweise ausgelegt, um eine Temperatur der am Ausgang der Sekundärseite des Wärmetauschers vorliegenden Gase vor dem Eintritt in die Turbine um etwa 10% bis 40%, insbesondere 15% der in Grad Celsius gemessenen Eigentemperatur aufzuheizen.

Die erfindungsgemäße Vorrichtung wird im Folgenden anhand einer bevorzugten Ausführungsform erläutert, die in der Figur der Zeichnung dargestellt ist. Darin zeigt:

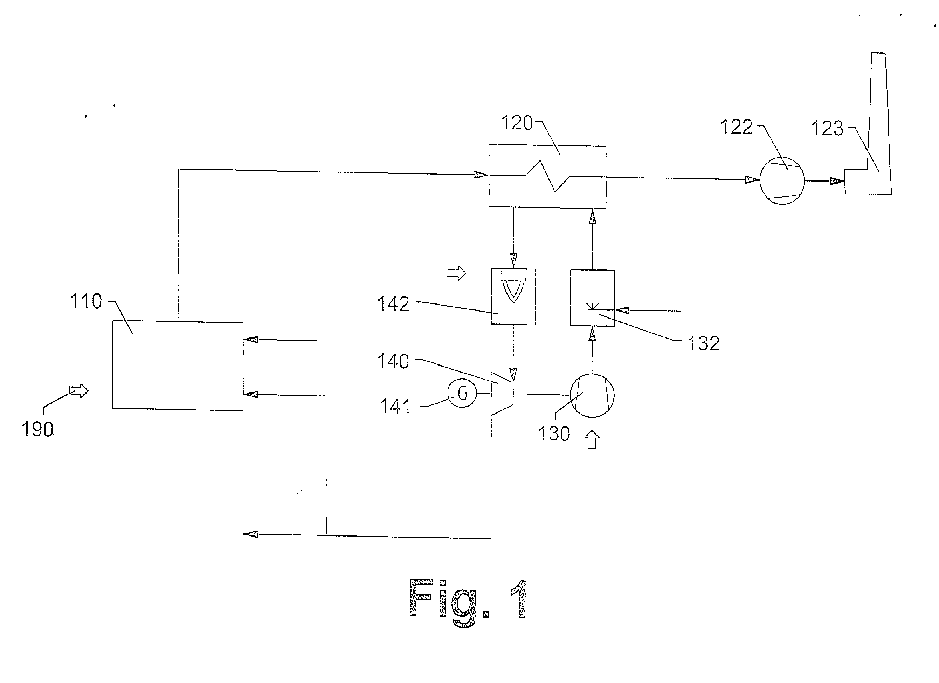

- Fig.1: eine bevorzugte Ausführungsform der erfindungs- gemäßen Vorrichtung, dargestellt anhand eines schematischen Blockdiagramms.

Die in Figur 1 dargestellte erfindungsgemäße Vorrichtung 100 zur Kraft-Wärmeerzeugung enthält eine Heißgase erzeugende Feuerungseinheit 110, wobei die in der Feuerungseinheit 110 erzeugten Heißgase dem Eingang einer Primärseite eines Wärmetauschers 120 zuführbar sind. Der Eingang einer Sekundärseite des Wärmetauschers 120 ist direkt mit dem Ausgang eines Kompressors 130 gekoppelt, und der Ausgang der Sekundärseite ist direkt mit dem Eingang einer Turbine gekoppelt, um mittels des Kompressors 130 komprimierte Luft für den Betrieb der mit einem elektrischen Generator 141 gekoppelten Turbine 140 zu erhitzen. Die am Ausgang der Turbine 140 vorliegenden Heißgase sind direkt in die Feuerungseinheit zurückleitbar.

Dabei ist zwischen dem Ausgang des Wärmetauschers 120 und dem Eingang der Turbine 140 eine als Nachbrennkammer wirkende Zufeuerungseinheit 142 vorgesehen, um die Temperatur der Heißgase vor Eintritt in die Turbine 140 um etwa 25% der in Grad Celsius gemessenen Eigentemperatur zu erhöhen. Der Wärmetauscher 120 ist als Gas/GasWärmetauscher ausgelegt.

Die Feuerungseinheit ist ausgelegt, um Heißgase von etwa 1000°C zu erzeugen, die sich nach Durchlauf durch die Primärseite des Wärmetauschers 120 auf etwa 300°C abkühlen.

Die Zufeuerungseinheit ist ausgelegt, um die am Ausgang der Sekundärseite des betreffenden Wärmetauschers eine Temperatur von in der Regel etwa 840°C aufweisenden Gase vor dem Eintritt in die Turbine 140 auf etwa 970°C aufzuheizen.

Bezüglich der Menge und Fließgeschwindigkeit der zu verbrennenden Gase ist die Zufeuerungseinheit 142 technisch ausgelegt, um Pyrolysegase zu verbrennen.

Die Pyrolysegase sind durch Erhitzen von Biomasse mit einem hohen Anteil an Zellulose, in der Regel Holzhackschnitzel mit Rinden- und Grünanteilen, aber auch reine Rinden oder landwirtschaftliche Reststoffe wie zum Beispiel Nussschalen oder Stroh erstellt. Getrockneter Klärschlamm kommt ebenfalls als Biomasse in Frage.

Zwischen dem Ausgang des Kompressors 130 und dem Eingang der Sekundärseite des Wärmetauschers 120 ist des Weiteren eine als Einspritzkühler wirkende Wassereindüseinrichtung 132 vorgesehen, um die in der Regel eine Temperatur von etwa 260°C aufweisenden Austrittsgase der Primärseite des Wärmetauschers 120 auf etwa 160°C abzukühlen.

Die Wassereindüseinrichtung 132 ist ausgelegt, um die Effektivität einer Kühlung der Heißgase in der Primärseite des Wärmetauschers 120 zu erhöhen und um das Ausmaß eines Volumenstroms von Gasen durch die Sekundärseite des Wärmetauschers 120 zu erhöhen, wodurch die Ausgangsleistung der Turbine gesteigert wird.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Vorrichtung (100) zur Kraft-Wärmeerzeugung mit einer Heißgase erzeugenden Feuerungseinheit (110), wobei die in der Feuerungseinheit (110) erzeugten Heißgase dem Eingang einer Primärseite eines Wärmetauschers (120) zuführbar sind, wobei der Eingang der Sekundärseite des Wärmetauschers (120) mit mindestens indirekt dem Ausgang eines Kompressors (130) gekoppelt ist und der Ausgang der Sekundärseite mindestens indirekt mit dem Eingang einer Turbine gekoppelt ist, um mittels des Kompressors (130) komprimierte Luft für den Betrieb der mit einem elektrischen Generator (141) gekoppelten Turbine (140) zu erhitzen, und wobei die am Ausgang der Turbine (140) vorliegenden Heißgase zumindest indirekt in die Feuerungseinheit zurückleitbar sind, **dadurch gekennzeichnet, dass** zwischen dem Ausgang des Wärmetauschers (120) und dem Eingang der Turbine (140) eine als Nachbrennkammer wirkende Zufeuerungseinheit (142) vorgesehen ist, um die Temperatur der Heißgase vor Eintritt in die Turbine (140) weiter zu erhöhen.

2. Vorrichtung nach Anspruch 1, **dadurch gekennzeichnet, dass** der Wärmetauscher (120) als Gas/Gas-Wärmetauscher ausgelegt ist.

3. Vorrichtung nach einem der vorhergehenden Ansprüche, **dadurch gekennzeichnet, dass** die Zufeuerungseinheit ausgelegt ist, um Pyrolyseöle zu verbrennen.

4. Vorrichtung nach einem der vorhergehenden Ansprüche, **dadurch gekennzeichnet, dass** zwischen dem Ausgang des Kompressors (130) und dem Eingang der Sekundärseite des Wärmetauschers (120) eine als Einspritzkühler wirkende Wassereindüseinrichtung (132) vorgesehen ist.

5. Vorrichtung nach Anspruch 4, **dadurch gekennzeichnet, dass** die Wassereindüseinrichtung (132) ausgelegt ist, um die Effektivität einer Kühlung der Heißgase auf der Primärseite des Wärmetauschers (120) zu erhöhen.

6. Vorrichtung nach einem der Ansprüche 4 oder 5, **dadurch gekennzeichnet, dass** die Wassereindüseinrichtung (132) ausgelegt ist, um das Ausmaß eines Volumenstroms von Gasen durch die Sekundärseite des Wärmetauschers (120) zu erhöhen.

7. Vorrichtung nach einem der Ansprüche 4 bis 6, **dadurch gekennzeichnet, dass** die Wassereindüseinrichtung (132) ausgelegt ist, um eine Temperatur der Austrittsgase der Primärseite des Wärmetauschers (120) um etwa 10% bis 60% der in Grad Celsius gemessenen Eigentemperatur zu senken.

8. Vorrichtung nach Anspruch 7, **dadurch gekennzeichnet, dass** die Wassereindüseinrichtung (132) ausgelegt ist, um eine Temperatur der Austrittsgase der Primärseite des Wärmetauschers (120) um etwa 40% der in Grad Celsius gemessenen Eigentemperatur zu senken.

9. Vorrichtung nach einem der vorhergehenden Ansprüche, **dadurch gekennzeichnet, dass** die Zufeuerungseinheit (142) ausgelegt ist, um eine Temperatur der am Ausgang der Sekundärseite des Wärmetauschers (120) vorliegenden Gase vor dem Eintritt in die Turbine um etwa 10% bis 40% der in Grad Celsius gemessenen Eigentemperatur aufzuheizen.

10. Vorrichtung nach Anspruch 9, **dadurch gekennzeichnet, dass** die Zufeuerungseinheit (142) ausgelegt ist, um eine Temperatur der am Ausgang der Sekundärseite des Wärmetauschers (120) vorliegenden Gase vor dem Eintritt in die Turbine (140) um etwa 15% der in Grad Celsius gemessenen Eigentemperatur aufzuheizen.
